Europäisches Patentamt

(19) European Patent Office

Office européen des brevets

(11) Veröffentlichungsnummer: **0 085 085**
**B1**

(12) # EUROPÄISCHE PATENTSCHRIFT

(45) Veröffentlichungstag der Patentschrift:
15.10.86

(51) Int. Cl.⁴: **A 61 C 11/00**

(21) Anmeldenummer: 82902447.0

(22) Anmeldetag: 07.08.82

(86) Internationale Anmeldenummer:
PCT/EP 82/00168

(87) Internationale Veröffentlichungsnummer:
WO 83/00431 (17.02.83 Gazette 83/05)

(54) **VORRICHTUNG ZUM HERSTELLEN EINES ZAHNTECHNISCHEN ARBEITSMODELLES.**

(30) Priorität: 11.08.81 DE 3131689

(43) Veröffentlichungstag der Anmeldung:
10.08.83 Patentblatt 83/32

(45) Bekanntmachung des Hinweises auf die Patenterteilung:
15.10.86 Patentblatt 86/42

(84) Benannte Vertragsstaaten:
AT BE CH DE FR GB LI LU NL SE

(56) Entgegenhaltungen:
WO-A-79/00076
DE-A-2 922 187
FR-A-1 559 188
US-A-4 169 314

(73) Patentinhaber: Ipco Corporation, 1025 Westchester
Avenue White Plains, New York 10604 (US)

(72) Erfinder: BRAUN, Frank D., Immermannstrasse 35,
D-4000 Düsseldorf (DE)
Erfinder: WITT, Walter, Drosselstrasse 24, D-5000
Köln 40 (DE)
Erfinder: PUTRA, Stanislav, Erbslöhstrasse 19,
D-5650 Solingen 19 (DE)

(74) Vertreter: Patentanwälte Dr. Solf & Zapf,
Schlossbleiche 20 Postfach 13 01 13, D-5600
Wuppertal 1 (DE)

## Beschreibung

Die Erfindung betrifft eine Vorrichtung zum Herstellen eines zahntechnischen Arbeitsmodelles für die Anfertigung von prothetischen Arbeiten durch Ausgießen mit Modellmasse bei Auflage auf einer ebenen Unterlage, bestehend aus einer den Modellsockel bildenden einteiligen Sockelform mit einem der Bogenform des Zahnkiefers angepaßten Hohlraum, der von zwei gleich hohen Wandungen, einer Außen- und einer Innenwandung, begrenzt ist, mit an den Innenseiten der Wandungen ausgebildeten Rippen zur Bildung von Retentionsmarken, wobei sich der Hohlraum von unten von der Auflagefläche nach oben hin erweitert und nach oben und unten im wesentlichen offen ausgebildet ist, und mit einer durchgehenden, beide Enden des bogenförmigen Hohlraumes verschließenden Rückwandung.

Eine derartige Vorrichtung ist bereits aus dem Dokument WO-A-79 100 076 bekannt. Die Sockelform dieser Vorrichtung dient neben der Herstellung von Arbeitsmodellen auch zur Halterung der Modelle während der Anfertigung von Prothesen. Nachteilig ist aber, daß die bekannte Vorrichtung nicht an einem Artikulator befestigt werden kann, da zur Nachahmung der Kieferbewegungen die Modelle auf einem Artikulator befestigt werden müssen. Bisher erfolgt diese Befestigung z.B. mittels Metallplatten oder anderen Befestigungsmitteln, die artikulatorseitig lösbar und modellseitig vorzugsweise eingegipst sind. Das Ausrichten der beiden Zahnmodelle im Artikulator erfolgt mittels einer aus Wachs bestehenden Bißabnahme, die zwischen die beiden Zahnmodelle eingesetzt wird, so daß die Zähne derselben dieselbe Zuordnung wie im Mund des Patienten einnehmen, wobei aber die Gipsmasse zum Befestigen der Metallplatte noch weich genug ist, um ein Ausrichten der Abdrücke im Artikulator zu ermöglichen. In der zueinander mittels der Bißabnahme ausgerichteten Stellung werden die beiden Zahnmodelle so lange fixiert, bis der Gips ausgetrocknet ist. Danach ist die Bearbeitung der zahnmodelle im Artikulator möglich. Das Eingipsen der Zahnmodelle in Verbindung mit den Metallplatten ist aber arbeitsintensiv und zeitaufwendig. Weiterhin sind die derart zueinander ausgerichteten Zahnmodelle an den jeweiligen Artikulator gebunden und können nicht in einen anderen Artikulator eingesetzt werden, so daß, falls erforderlich, die Kiefernmodelle immer zusammen mit dem jeweiligen Artikulator verschickt werden müssen, z.B. vom Zahnlabor zum Zahnarzt und umgekehrt, was sehr umständlich und kostenintensiv ist.

Der Erfindung liegt daher die Aufgabe zugrunde, die eingangs beschriebene Vorrichtung derart zu verbessern, daß sie auch zur einfachen, aber dennoch sicheren sowie gut wieder lösbaren Halterung von Arbeitsmodellen an Artikulatoren ohne Verwendung von Gips verwendet werden kann, wobei eine beliebige Übertragbarkeit von Artikulator zu Artikulator gewährleistet ist.

Erfindungsgemäß wird dies dadurch erreicht, daß zwischen der Innenwandung der Sockelform und ihrer Rückwandung eine etwa parabelförmige horizontale Platte gegenüber der Auflagefläche der Sockelform nach oben versetzt ausgebildet ist, in deren Unterseite ein Dauermagnet eingelassen ist. Hierdurch liegt in dem Raum unterhalb der parabelförmigen Platte ein Hohlraum vor, wobei der Versatz der Platte gegenüber der Unterkante der Sockelform nach oben in der Höhe derart ist, daß ein Schuh eines Artikulators in diesem Hohlraum unterhalb der Platte vollständig aufnehmbar ist. Der Schuh des Artikulators weist eine magnetisierbare Platte auf, wodurch der erfindungsgemäß vorgesehene Dauermagnet für eine sichere Fixierung der Sockelform auf dem Artikulator sorgt.

Weiterhin ist erfindungsgemäß vorgesehen, daß in der Unterseite der Platte eine Zentriervertiefung ausgebildet ist, die mit einem entsprechenden Zentrieransatz des Artikulatorschuhs für die exakte Zentrierung des Modells sorgt. Durch diese vorteilhafte Ausgestaltung ist es auf leichte Art möglich, die Sockelform zusammen mit den in ihr befindlichen Zahnmodellen im Artikulator zu befestigen und aus diesem wieder herauszunehmen, denn in den Raum zwischen der Platte und der Unterkante wird der Artikulatorschuh eingesetzt und mittels des Magneten fixiert.

Anhand eines in den Zeichnungen dargestellten Ausführungsbeispieles wird im folgenden die Erfindung näher erläutert. Dabei zeigt:

Fig. 1 einen Querschnitt durch eine erfindungsgemäße Vorrichtung zum Herstellen eines zahntechnischen Arbeitsmodelles und

Fig. 2 eine Aufsicht auf einen Schuh zur Befestigung der erfindungsgemäßen Vorrichtung an einem Artikulator.

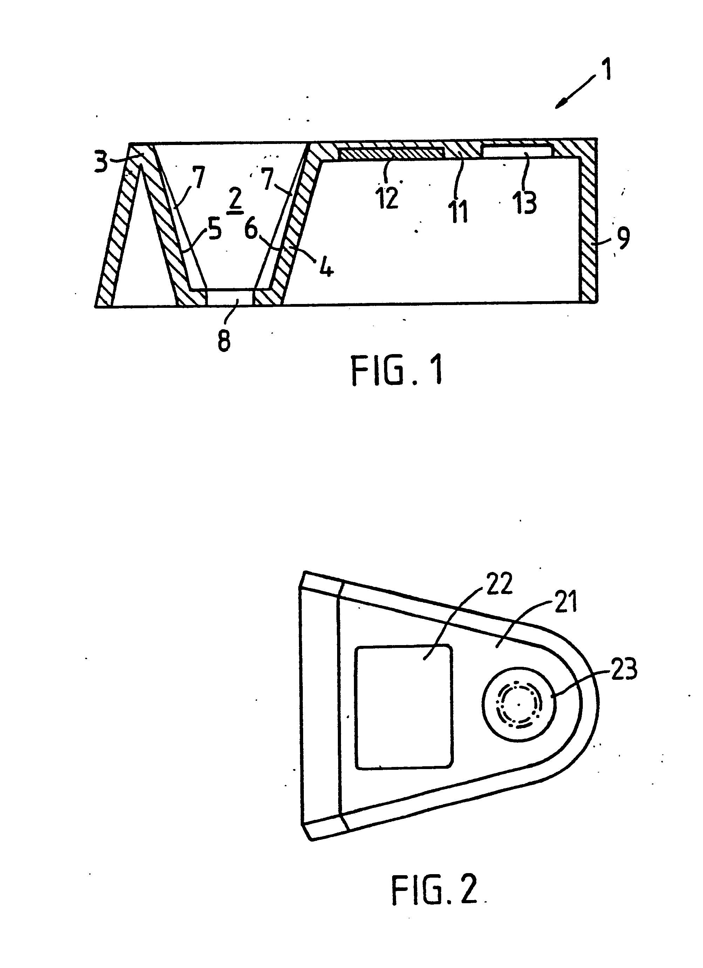

Fig. 1 zeigt in einer Schnittdarstellung eine erfindungsgemäße Vorrichtung zum Herstellen eines zahntechnischen Arbeitsmodelles. Diese Vorrichtung besteht aus einer einteiligen Sockelform 1, die als vorgefertigtes Teil als Modellsockel eines Arbeitsmodelles oder Sägemodells dient, mit einem der Bogenform des Zahnkiefers angepaßten Hohlraum 2, der von zwei gleich hohen Wandungen, einer Außenwandung 3 und einer Innenwandung 4, begrenzt ist. An den Innenseiten 5, 6 dieser Wandungen 3, 4 sind Rippen 7 zur Bildung von Retentionsmarken ausgebildet. Der Hohlraum 2 erweitert sich von unten, d.h. von der Auflagefläche der Sockelform 1, nach oben hin und ist nach oben völlig offen und nach unten bis auf Stege 8 offen ausgebildet. Der Hohlraum 2 ist an beiden Enden seiner Bogenform durch eine durchgehende Rückwandung 9 verschlossen.

Erfindungsgemäß ist nun vorgesehen, daß zwischen der Innenwandung 4 der Sockelform 1

und ihrer Rückwandung 9 eine etwa parabelförmige horizontale Platte 11 gegenüber der Auflagefläche der Sockelform 1 nach oben versetzt ausgebildet ist, in deren Unterseite ein Dauermagnet 12 eingelassen ist. Weiterhin ist vorteilhafterweise in der Unterseite der Platte 11 eine Zentriervertiefung 13 ausgebildet. Der Versatz der Platte 11 gegenüber der Unterkante der Sockelform 1 nach oben ist in der Höhe derart, daß ein Schuh eines Artikulators in einem unterhalb der Platte 11 befindlichen Raum vollständig aufnehmbar ist.

In Fig. 2 ist ein solcher Schuh 21 eines Artikulators dargestellt. Dieser Schuh 21 besitzt eine parabelförmige, dem Raum unterhalb der Platte 11 angepaßte Umfangskontur. Dabei sind die parabelförmig verlaufenden Seitenwände nach unten konisch abgeschrägt, so daß die Oberfläche größer ist als die Unterfläche des Schuhes 21. In der Oberseite des Schuhes 21 ist eine magnetisierbare Platte 22 eingelassen. Weiterhin ist an der Oberseite ein Zentrieransatz 23 vorgesehen. Durch diese vorteilhafte Ausbildung ist der Schuh 21 vollständig in dem Raum unterhalb der Platte 11 aufnehmbar. Durch den Magneten 12, der mit der magnetisierbaren Platte 22 im Schuh 21 zusammenwirkt, wird die Sockelform 1 am Schuh 21 befestigt, wobei eine Ausrichtung mittels des Zentrieransatzes 23 in der Vertiefung 13 erfolgt.

Die Befestigung der erfindungsgemäßen Sockelform 1 ist somit sowohl am Artikulatorunterteil (in der in Fig. 1 dargestellten Lage), als auch am Artikulatoroberteil (in einer gegenüber Fig. 1 um 180° gedrehten Lage) möglich.

Durch Anpassung der Befestigung des Schuhes 21 an die jeweils verwendeten Artikulatoren ist die Verwendung der erfindungsgemäßen Sockelform in Verbindung mit allen gebräuchlichen Artikulatortypen möglich. Daher brauchen vorteilhafterweise nur noch Sockelformen 1 und ggf. Schuhe 21 zwischen Zahnarzt und Zahntechniker verschickt zu werden, nicht jedoch die Artikulatoren selbst.

## Patentansprüche

1. Vorrichtung zum Herstellen eines zahntechnischen Arbeitsmodelles für die Anfertigung von prothetischen Arbeiten durch Ausgießen mit Modellmasse bei Auflage auf einer ebenen Unterlage, bestehend aus einer den Modellsockel bildenden einteiligen Sockelform (1) mit einem der Bogenform des Zahnkiefers angepaßten Hohlraum (2), der von zwei gleich hohen Wandungen, einer Außen- (3) und einer Innenwandung (4), begrenzt ist, mit an den Innenseiten (5, 6) der Wandungen ausgebildeten Rippen (7) zur Bildung von Retentionsmarken, wobei sich der Hohlraum von unten von der Auflagefläche nach oben hin erweitert und nach oben und unten im wesentlichen offen ausgebildet ist, und mit einer durchgehenden, beide Enden des bogenförmigen Hohlraumes verschließenden Rückwandung (9), dadurch gekennzeichnet, daß zwischen der Innenwandung 4) der Sockelform (1) und ihrer Rückwandung (9) eine etwa parabelförmige horizontale Platte (11) gegenüber der Auflagefläche der Sockelform (1) nach oben versetzt ausgebildet ist, in deren Unterseite ein Dauermagnet (12) eingelassen ist.

2. Vorrichtung nach Anspruch 1, dadurch gekennzeichnet, daß in der Unterseite der Platte (11) eine Zentriervertiefung (13) ausgebildet ist.

3. Vorrichtung nach Anspruch 1 oder 2, dadurch gekennzeichnet, daß der Versatz der Platte (11) gegenüber der Unterkante der Sockelform (1) nach oben in der Höhe derart ist, daß ein Schuh (21) eines Artikulators in einem unterhalb der Platte (11) befindlichen Raum vollständig aufnehmbar ist.

## Claims

1. Apparatus for producing a model of a dental prosthesis for manufacture of prosthetic work by filling with modelling material resting on a flat substrate, the apparatus comprising a one-part base mould (1) forming the base of the model and having a cavity (2) adapted to the arcuate shape of the tooth jaw and bounded by two walls of equal height, i.e. an outer wall (3) and an inner wall (4), ribs (7) being formed on the inner sides (5, 6) of the walls to form retention marks, the cavity widening upwards from the bearing surface and being substantially open above and beneath and having a continuous back wall (9) closing both ends of the arcuate cavity, characterised in that a substantially parabolic horizontal plate (11) between the inner wall (4) of the base mould (1) and the back wall (9) thereof is offset upwards relative to the bearing surface of the base mould (1) and a permanent magnet (12) is inserted into its underside.

2. Apparatus according to claim 1, characterised in that a centring recess (13) is formed in the underside of the plate (11).

3. Apparatus according to claim 1 or 2, characterised in that the vertical offset of the plate (11) relative to the underside of the base mould (1) is such that a shoe (21) of an articulator can be completely received in a cavity underneath the plate (11).

## Revendications

1. Dispositif pour la fabrication d'un modèle de prothèse dentaire destiné à l'exécution de prothèses par remplissage de matière de moulage, le modèle étant posé sur un support plan comprenant un moule (1) en une seule pièce formant le socle du modèle pourvu d'un creux (2) adapté à la forme courbe de la gencive et qui est limité par deux parois de même hauteur, une paroi extérieure (3) et une paroi intérieure (4), les côtés intérieurs (5, 6) desdites parois étant munis de nervures (7) pour former des marques de rétention, le creux s'élargissant vers le haut depuis la surface d'assise intérieure et étant ouvert vers le haut et le bas et possédant une paroi arrière (8) continue qui ferme ses deux extrémités, caractérisé par le fait qu'entre la paroi intérieure (4) du moule (1) et la paroi arrière (9) de celui-ci il est prévu, en regard de la surface d'assise et décalée vers le haut, une plaque (11) horizontale sensiblement parabolique, dans la face intérieure de laquelle est incorporé un aimant permanant (12).

2. Dispositif selon la revendication 1, caractérisé en ce que la face inférieure de la plaque (11) possède un évidement de centrage (13).

3. Dispositif selon la revendication 1 ou 2, caractérisé en ce que la hauteur du décalage de la plaque (11) par rapport au bord inférieur du moule (1) est telle que le sabot (21) d'un organe d'articulation peut être complétement logé dans un espace situé en dessous de ladite plaque (11).

FIG. 1

FIG. 2